# EUROPÄISCHE PATENTSCHRIFT

(11) **EP 1 038 707 B1**
(45) Veröffentlichungstag und Bekanntmachung des Hinweises auf die Patenterteilung: **08.02.2006**
(21) Anmeldenummer: 00104330.6
(22) Anmeldetag: 02.03.2000
(51) Int. Cl.: B60J 1/18, B60J 7/20, B60J 7/12

(54) **Cabriolet-Fahrzeug mit absenkbarer Heckscheibe**
Convertible vehicle equipped with a lowerable rear window
Véhicule cabriolet équipé d'une lunette arrière escamotable

(30) Priorität: 19.03.1999 DE 19912355
(43) Veröffentlichungstag der Anmeldung: 27.09.2000
(73) Patentinhaber: Wilhelm Karmann GmbH, 49084 Osnabrück (DE)
(72) Erfinder: Maass, Joachim, 49143 Bissendorf (DE); Lehnig, Frank, 49086 Osnabrück (DE)
(74) Vertreter: Busse & Busse Patentanwälte

(56) Entgegenhaltungen:
- DE-A- 4 320 492
- US-A- 2 836 457
- US-A- 4 543 747

## Beschreibung

Die Erfindung bezieht sich auf ein Cabriolet-Fahrzeug mit einer unterhalb einer die Karosserie oberseitig begrenzenden Fensterbrüstungslinie absenkbaren Heckscheibe nach dem Oberbegriff des Anspruchs 1.

Die DE 43 20 603 C2 zeigt ein Cabriolet-Fahrzeug, bei dem eine Heckscheibe in einem quer in einer Fahrzeugkarosserie eingebauten Schacht getrennt vom Dachaufbau gehalten ist und aus einer in diesem gehaltenen ruhenden Offenstellung der Heckscheibe in eine Schließstellung zur rückwärtigen Abdichtung des Verdecks aufwärts verlagerbar ist. Zur Montage eines solchen Cabriolet-Fahrzeugs ist es notwendig, sowohl den Dachaufbau gegenüber der Karosserie auszurichten als auch das die Scheibe in Ruhestellung umfassende Schacht-Modul gegenüber der Karosserie und gegenüber dem Dachaufbau zu justieren. Dieses erhöht die Einstellarbeiten bei der Montage beträchtlich. Zudem ist das die Scheibe aufnehmende Modul ein schweres und sperriges Bauteil, das aufgrund seiner Ausdehnung im eingebauten Zustand den Gepäckraum verkürzt.

Aus der DE 36 07 650 A1 ist ein Cabriolet-Fahrzeug bekannt, dessen Heckscheibe über zwei Hebelpaare mitsamt ihrem Rahmen aus einer eine Heckscheibenöffnung verschließenden Position in eine von dem Dach entfernte Stauposition verlagert werden kann. Eine derartige Hebelmechanik ist außerordentlich aufwendig und benötigt einen hohen Platzbedarf im Fahrzeug, zudem ist in Schließstellung der die Heckscheibe haltende Rahmen nur gegen die Austrittsöffnung gepreßt, so daß dort Dichtungsprobleme entstehen.

Ein Cabrioletfahrzeug mit der gattungsgemäßen Hechscheibe ist aus DE 43 20 492 bekannt.

Der Erfindung liegt das Problem zugrunde, ein Cabriolet-Fahrzeug der eingangs genannten Art hinsichtlich seiner Montageeigenschaften zu verbessern.

Die Erfindung löst dieses Problem durch ein Cabriolet-Fahrzeug mit den kennzeichnenden Merkmalen des Anspruchs 1. Vorteilhafte Ausgestaltungen sind in den Ansprüchen 2 bis 15 angegeben.

Durch die erfindungsgemäße Halterung der Heckscheibe in einem fest mit dem Dach verbundenen Rahmen ist eine Justage eines weiteren Bauteils gegenüber dem Verdeck vermieden. Sowohl in Normalstellung als auch in Absenkstellung bleibt die Heckscheibe mit dem Verdeck verbunden, ist damit allein durch die Justage des Daches hinreichend ausgerichtet und wird zusammen mit diesem - ebenso wie sonst eine fest eingebaute Heckscheibe - auf das Fahrzeug montiert.

Besonders vorteilhaft hängt die Scheibe in Absenkstellung unterhalb des führenden Rahmens frei in der Karosserie, so daß weitere sperrige und schwere Bauteile entbehrlich sind.

Wenn in besonders vorteilhafter Ausgestaltung die Heckscheibe gegenüber dem nach unten geöffneten Rahmen aufschwenkbar ist, kann während des Öffnens oder Schließens des Daches der Rahmen bei aufgeschwenkter Heckscheibe über Hindernisse, wie etwa Kopfstützen oder Überrollbügel, hinweggeführt werden, die bei geschlossener Heckscheibe mit dieser kollidieren würden. Dadurch lassen sich insbesondere bei viersitzigen Cabriolets sehr günstige kinematische Aufschwenkverhältnisse des Daches schaffen, aus denen eine erhöhte Kopffreiheit für die hinten sitzenden Personen bei gleichzeitig vorteilhafter Optik resultieren. Bei einer annähernd vertikalen Stellung der Heckscheibe ergibt sich zudem eine sehr gute Sicht nach hinten.

Weitere Vorteile und Merkmale ergeben sich aus nachfolgend in der Zeichnung dargestellten und beschriebenen Ausführungsbeispielen des Gegenstandes der Erfindung.

In der Zeichnung zeigt:

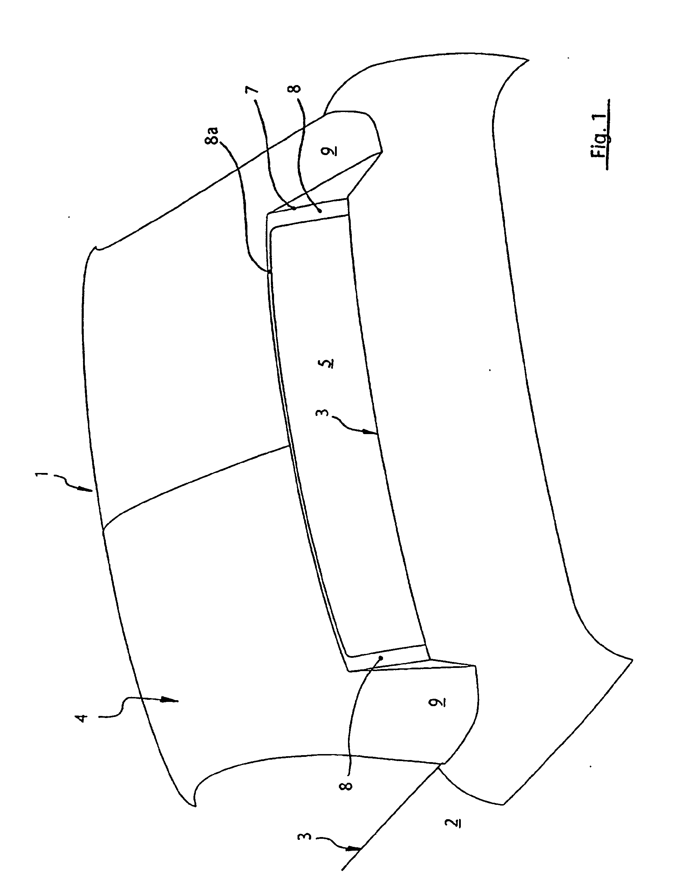

- Fig. 1: eine perspektivische, schematische Teilheckansicht eines erfindungsgemäßen Cabriolet-Fahrzeugs,
- Fig. 2: eine schematisierte Seitenansicht des rückwärtigen Verdeckbereiches bei in Normalstellung befindlicher Heckscheibe,
- Fig. 2a: einen Schnitt entlang der Linie IIa-IIa in Fig. 2,
- Fig. 2b: eine Detailansicht etwa des Bereiches IIb in Fig. 2, geschnitten in der Längsmittelebene des Fahrzeugs,

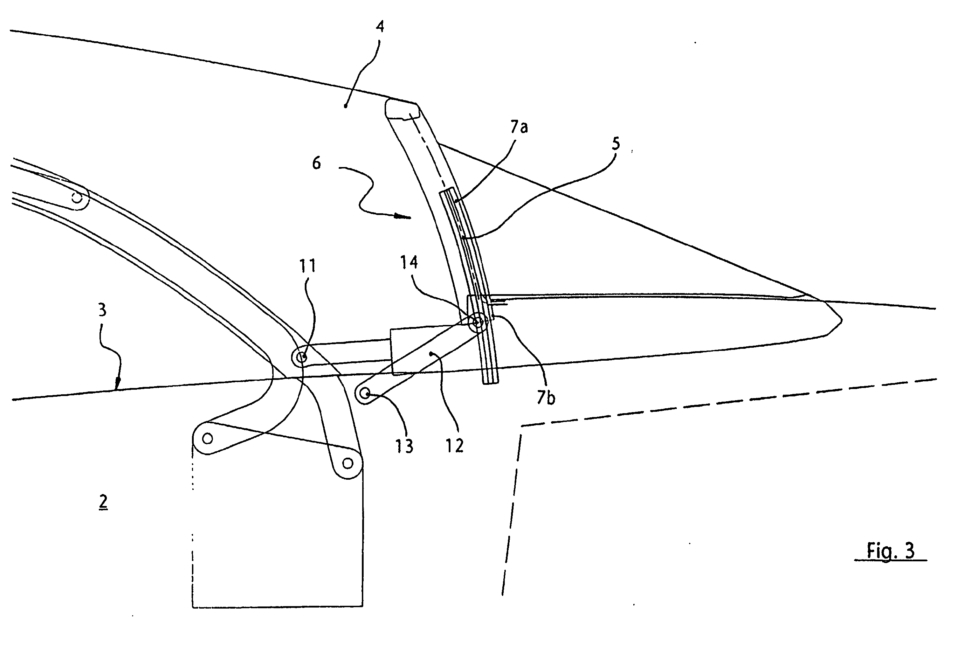

- Fig. 3: eine ähnliche Ansicht wie Fig. 2 bei teilweise abgesenkter Heckscheibe,
- Fig. 4: eine ähnliche Ansicht wie Fig. 3 bei vollständig abgesenkter Heckscheibe,
- Fig. 5: eine ähnliche Ansicht wie Fig. 2 einer alternativen Ausführungsform, die zusätzlich eine Schwenkhebelsteuerung zur Bewirkung einer Aufschwenkbarkeit der Heckscheibe umfaßt,
- Fig. 5a: einen Schnitt entlang der Linie Va-Va in Fig. 5,
- Fig. 5b: eine Detailansicht des Bereiches Vb in Fig. 5, geschnitten in der Längsmittelebene des Fahrzeugs,
- Fig. 6: die Ausführung nach Fig. 5 während des Öffnens des Daches,
- Fig. 7: eine ähnliche Ansicht wie Fig. 6 bei weiterem Fortschreiten der Dachöffnung,
- Fig. 8: die Ausführung nach Fig. 5 bei vollständig abgelegtem Dach mit darin befindlicher Heckscheibe,
- Fig. 9: die Ausführung nach Fig. 5 bei geschlossenem Dach und abgesenkter Heckscheibe,
- Fig. 10: eine ähnliche Ansicht wie Fig. 9 einer altemativen Ausführungsform mit einem zusätzlichen Antriebshebel,
- Fig. 10a: einen Schnitt entlang der Linie Xa-Xa in Fig. 10,
- Fig. 10b: eine Detailansicht des oberen Querholms des Rahmens, etwa den Bereich Xb in Fig. 10, geschnitten in der Fahrzeuglängsmittelebene,
- Fig. 11: eine ähnliche Ansicht wie Fig. 5 einer weiteren Ausführungsform mit Antriebshebel und Schwenkhebel zum Aufschwenken der Heckscheibe,
- Fig. 11a: einen Schnitt entlang der Linie Xla-Xla in Fig. 11,
- Fig. 11b: eine Detailansicht etwa des Bereiches XIb in Fig. 11, geschnitten in der Fahrzeuglängsmittelebene,
- Fig. 12: die Ausführungsform nach Fig. 11 während des Öffnens des Verdeckes,
- Fig. 13: eine ähnliche Ansicht wie Fig. 12 bei weiter fortschreitendender Verdecköffnung,
- Fig. 14: eine ähnliche Ansicht wie Fig. 13 bei vollständig abgelegtem Verdeck,

- Fig. 15: eine ähnliche Ansicht wie Fig. 11 bei teilweise abgesenkter Heckscheibe,
- Fig. 16: eine ähnliche Ansicht wie Fig. 15 bei vollständig abgesenkter Heckscheibe.

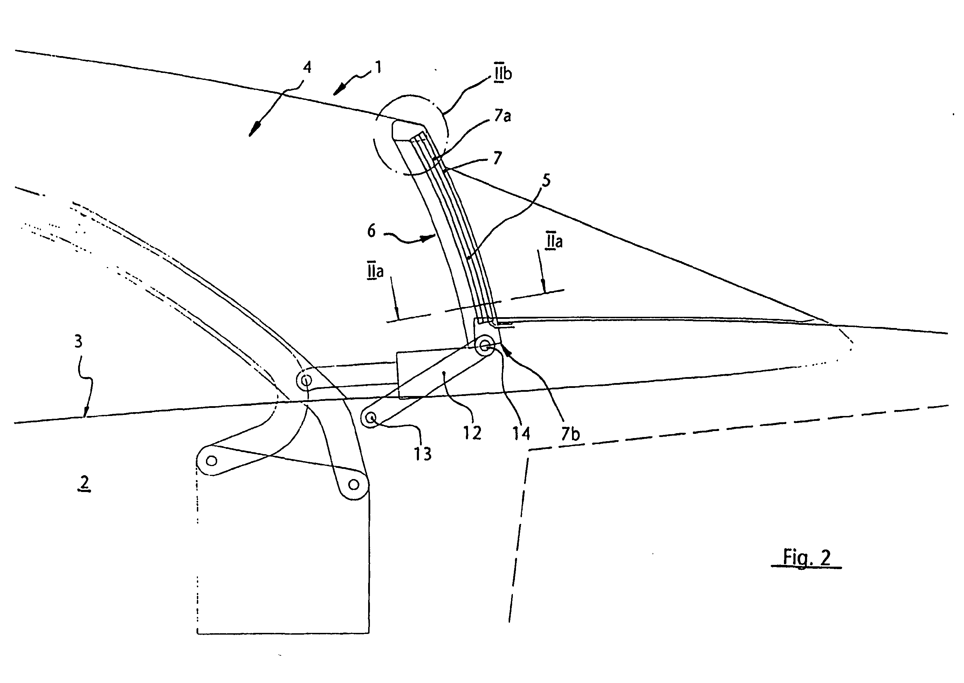

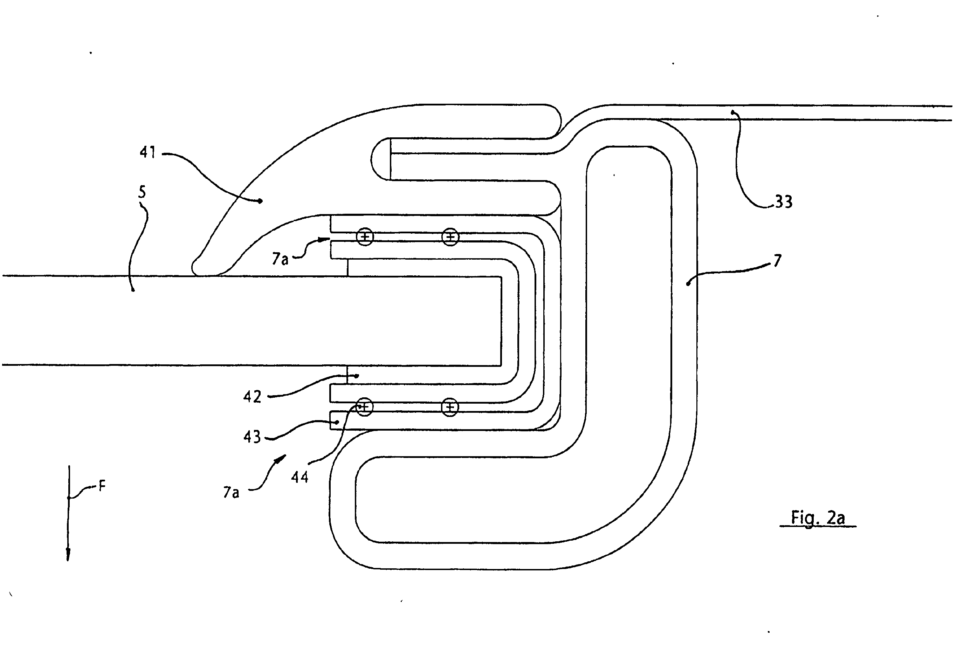

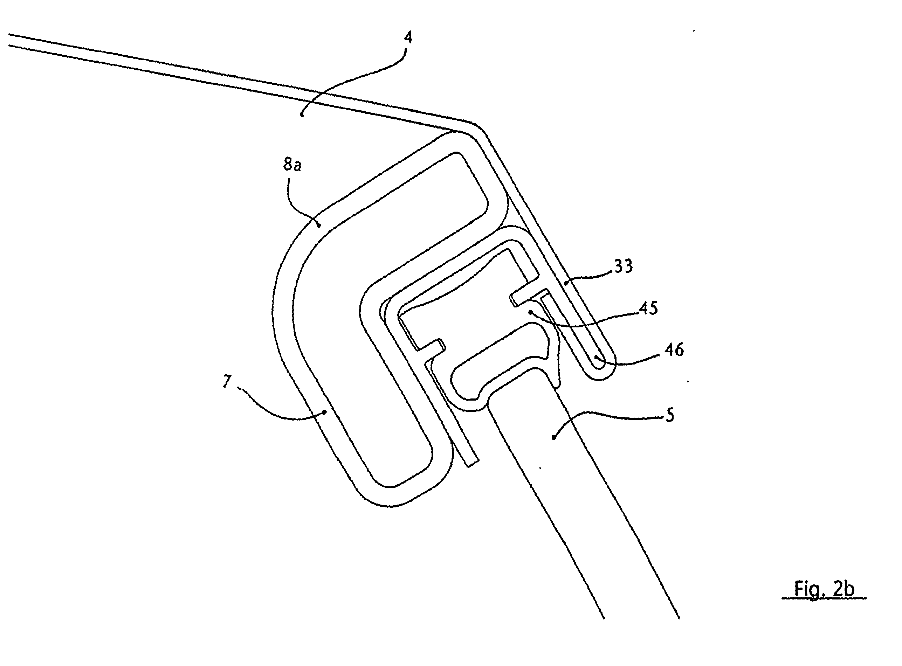

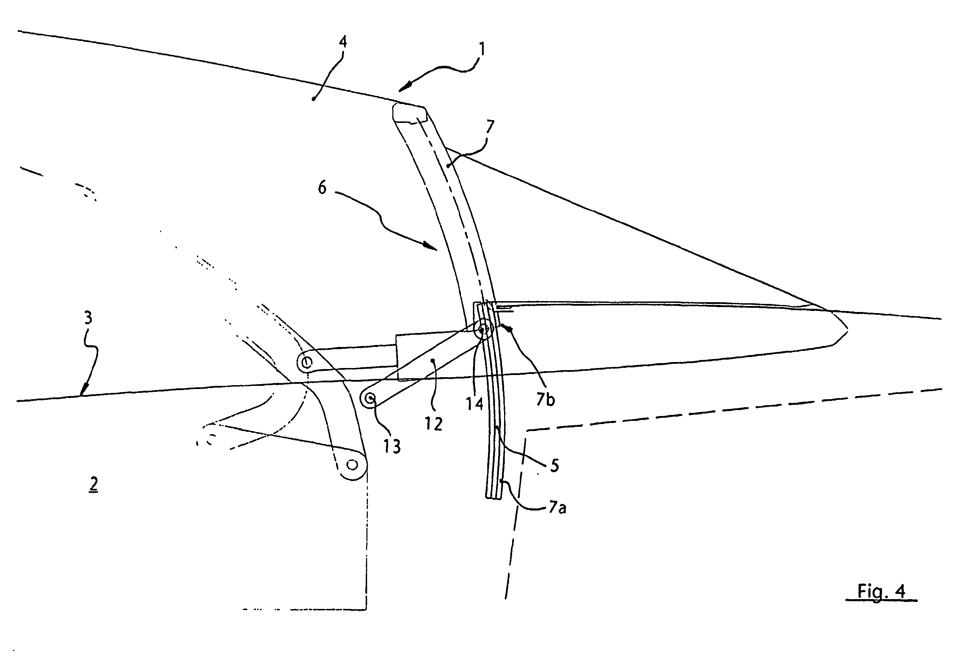

Ein Ausführungsbeispiel des erfindungsgemäßen Cabriolet-Fahrzeugs 1 weist eine Karosserie 2 auf, die an einer Fensterbrüstungslinie 3 oberseitig begrenzt ist und oberhalb dieser Fensterbrüstungslinie 3 ein auffaltbares Dach 4 umfaßt. Das Dach 4 ist mit einer Heckscheibe 5 versehen, die in geschlossener Stellung des Daches 4 aus einer Normalstellung, in der sie dieses nach hinten hin dichtend abschließt, in eine Absenkstellung verlagerbar ist. In Absenkstellung befindet sich die Heckscheibe 5 im wesentlichen unterhalb der Fensterbrüstungslinie 3, so daß der von der Heckscheibe eingenommene Ausschnitt 6 des Daches 4 im wesentlichen vollständig freigegeben ist. Die Heckscheibe 5 ist in einem Rahmen 7 sowohl in Normalstellung (Fig. 2) als auch in Absenkstellung (Fig. 4) gehalten. Der Rahmen 7 ist U-förmig ausgebildet und umfaßt zwei kurze Seitenschenkel 8 sowie einen mittleren Querschenkel 8a. In Richtung der Fensterbrüstung 3 ist der Rahmen 7 geöffnet. Der Rahmen 7 ist mit dem Dach 4, das beispielsweise als textiles Faltdach ausgebildet sein kann, fest verbunden, beispielsweise eingeklebt und/oder eingeschweißt. Er umfaßt dabei beispielsweise metallische Strangpreßprofile, er kann einstückig ausgebildet sein. Die in dem Rahmen 7 geführte Heckscheibe 5 kann aus Kunststoff oder Glas bestehen. Durch die feste Führung im Rahmen 7 kann eine starre Heckscheibe 5, ggf. mit Heizdrähten und/oder Antenne, Verwendung finden.

Die Führungsteile 7a;29 für die Verlagerung der Heckscheibe 5 zwischen der Normalstellung (Fig. 2) und der Absenkstellung (Fig. 4) sind im Rahmen 7 angeordnet.

Der Rahmen 7 kann hierfür im Querschnitt U-förmige Führungsteile 7a in den Seitenschenkeln 8 umfassen, die nach Art einer Schubladenführung teleskopisch ausgebildet sind. Die Führungsteile 7a umfassen dabei einen mit den Seitenbereichen der Heckscheibe 5 fest verbundenen und diese einfassenden, U-förmigen Rahmenabschnitt 42, der über Gleitelemente 44 gegenüber einem äußeren Rahmenabschnitt 43 auf und ab beweglich ist (Fig. 2a). Der Rahmenabschnitt 42 wird mit der Heckscheibe 5 abgesenkt, bleibt dabei mit seinem oberen Bereich in der äußeren Führung durch die Rahmenteile 43 gehalten. Die Heckscheibe 5 kann daher frei hängend in der Karosserie auch in Absenkstellung gehalten sein. Der Rahmen 7 ist an seitlichen Hebeln 12, die einenends um eine horizontale Achse 13 schwenkbar mit der Karosserie 2 verbunden sind und anderenends den unteren Rahmenbereich 7b des Rahmens 7 über eine weitere Schwenkachse 14 führen, gehalten und während der Dachöffnung beweglich, wie im zweiten Ausführungsbeispiel beschrieben ist.

Als oberer Anschlag für die Heckscheibe 5 in Normalstellung ist im Bereich des Querschenkels 8a eine Anschlagdichtung 45 vorgesehen, gegen die die Heckscheibe 5 gepreßt wird (Fig. 2b). In den Figuren 2a und 2b ist zudem sichtbar, daß der Verdeckstoff 33 des im Ausführungsbeispiel textilbespannten Daches 4 mit in eine Dichtung 41 eingepreßt bzw. an einem Ausleger 46 des Querschenkels 8a festgelegt ist.

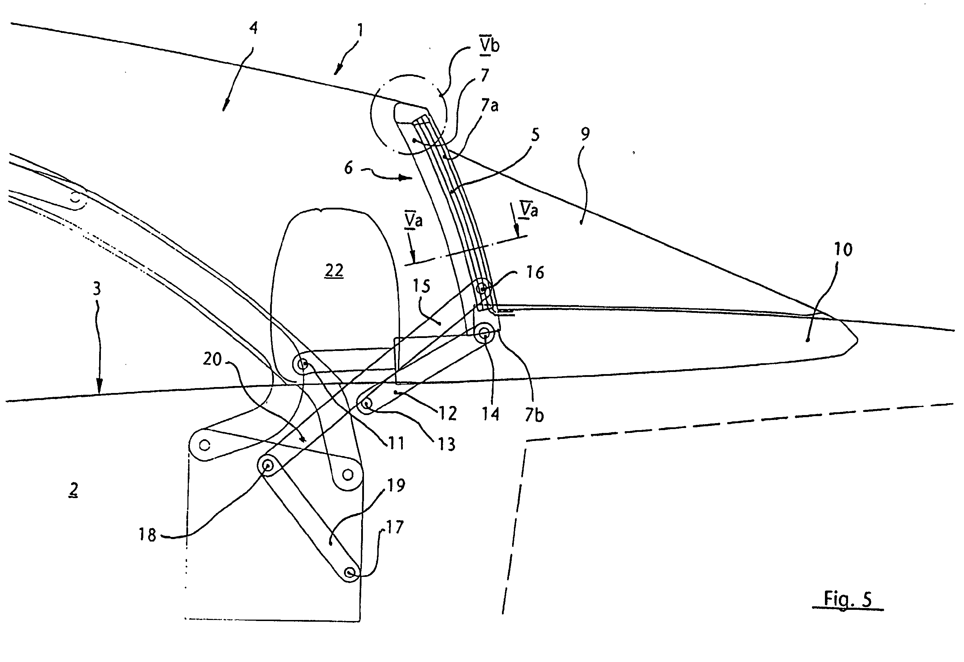

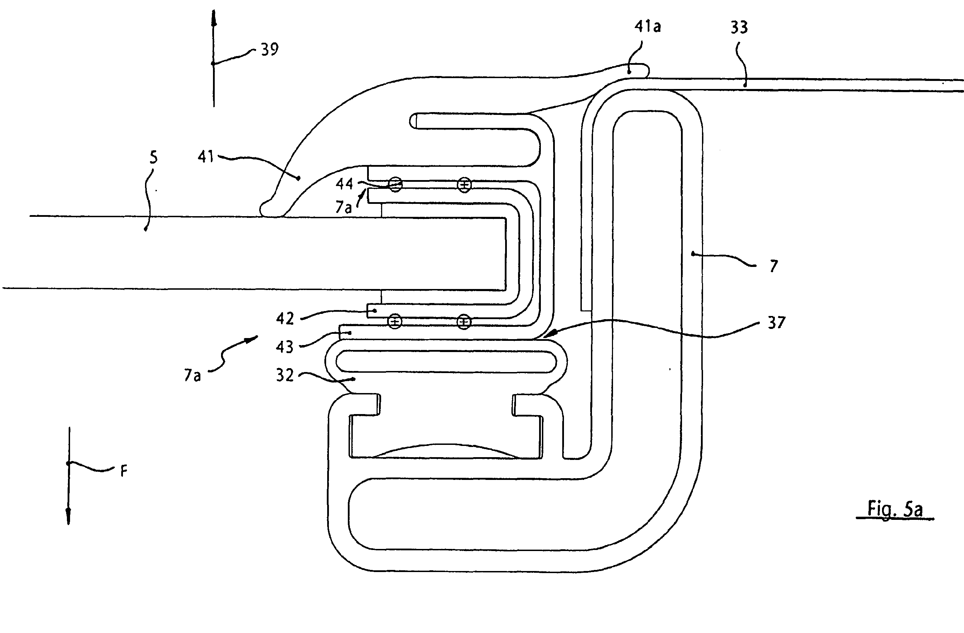

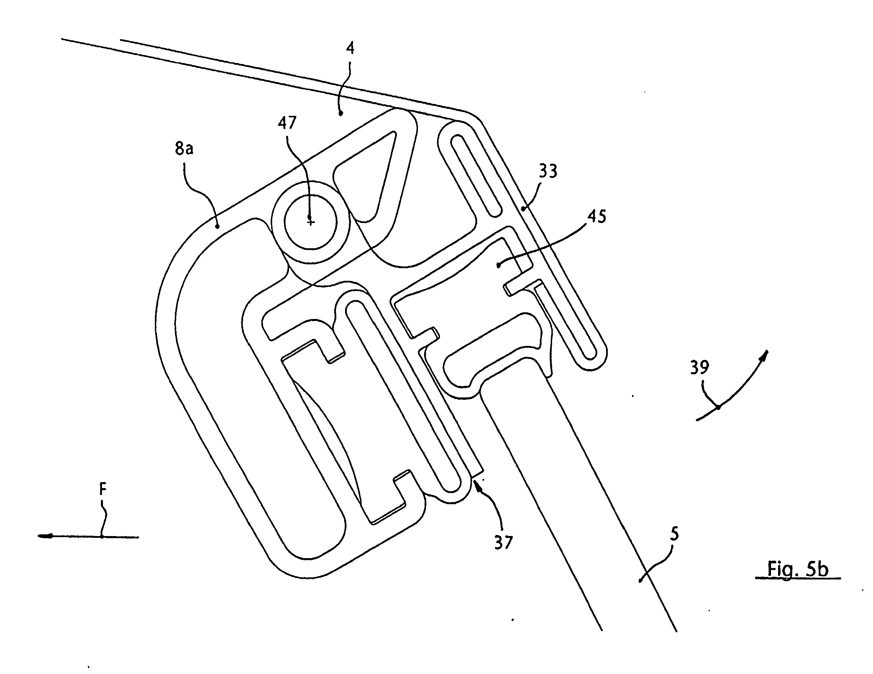

Gemäß einer weiteren Ausführungsform der Erfindung, die insbesondere bei mit einer Rückbank ausgestatteten Cabriolet-Fahrzeugen zum Einsatz kommt, ist die Heckscheibe 5 in dem Rahmen 7 schwenkbar gehalten. Die Heckscheibe 5 kann dann mit ihrem unteren Ende aufschwenken, um in aufgeschwenkter Stellung Hindernisse wie etwa Kopfstützten oder Überrollbügel (Fig. 5 bis Fig. 7) überwinden zu können. Eine derartige Beweglichkeit der Heckscheibe 5 eröffnet die Möglichkeit, das Verdeck mit einer nahezu senkrecht stehenden Heckscheibe 5 dicht hinter den Kopfstützen der rückwärtigen Sitze auszustatten, was die Sicht durch den Ausschnitt 6 nach hinten positiv beeinflußt. Es kann ein Dach 4 realisiert werden, das in zwei seitlichen, nach hinten vorstehenden und in Draufsicht im wesentlichen dreiecksförmigen Endbereichen 9 ausläuft und trotzdem die erwähnte nahezu vertikal stehende Heckscheibe 5 diesen Endbereich 9 vor- und zwischengelagert aufweist. Ferner ist durch diese Art des Daches 4 eine erhöhte Kopffreiheit für die hinteren Insassen sichergestellt. Eine geneigte Einbaulage der Heckscheibe 5 bleibt auch bei dieser Dachform möglich. Die Endbereiche 9 sind über Spannbügel 10, sogenannte Finnen, gegenüber der Karosserie 2 vorgespannt, so daß sich in Seitenansicht eine ähnliche Linienführung wie bei einem herkömmlichen Cabriolet-Verdeck mit schräg im Endbereich des Verdecks angeordneter Scheibe ergibt. Wie im ersten Ausführungsbeispiel ist der Rahmen 7 über seitliche Hebel 12 beweglich gehalten. Zusätzlich greift an den U-förmigen Führungsteilen 7a des Rahmens 7 im unteren Bereich über eine Schwenkachse 16 eine Schwenkhebelanordnung 15 an, die anderenends im Hauptlager 17 schwenkbar festgelegt ist. Die Schwenkhebelanordnung 15 umfaßt ein Gelenk 18, das ihre beiden Hebel 19,20 miteinander schwenkbar verbindet. Der Hebel 19 erstreckt sich vom Hauptlager 17 zum Gelenk 18, der Hebel 20 erstreckt sich vom Gelenk 18 zur Angriffsachse 16 an der Heckscheibe 5.

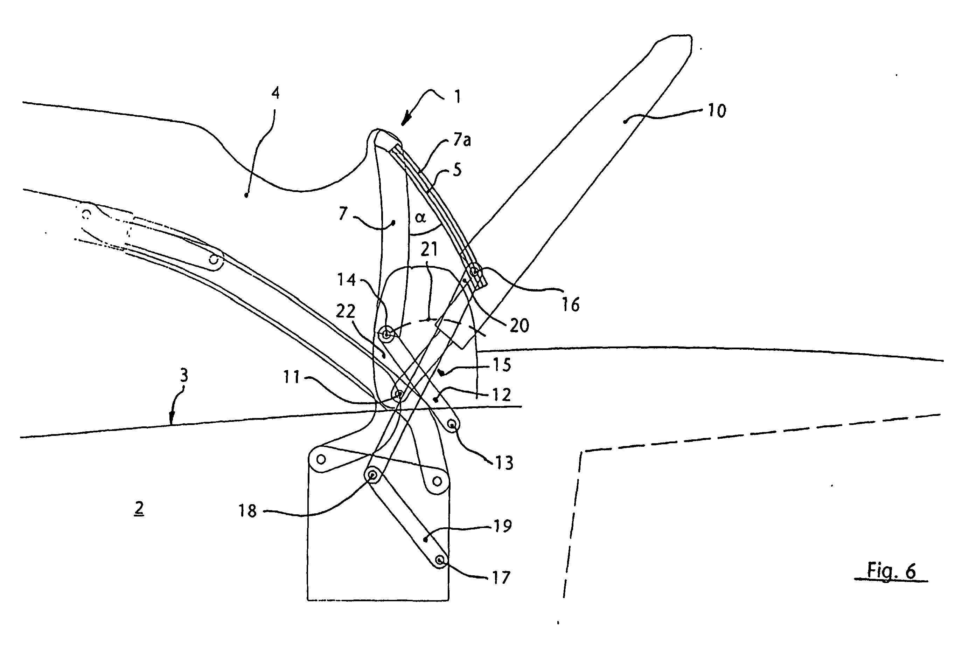

In der in Fig. 5 gezeigten geschlossenen Stellung des Daches 4 ist die Heckscheibe 5 mit ihrem unteren Ende in einem Abdichtungskanal gegenüber der Karosserie gehalten, so daß ein Aufschwenken in dieser Stellung nicht möglich ist. Zum Öffnen des Daches 4 (Fig. 6 bis Fig. 8) werden zunächst die Finnen 10 um die Schwenkachse 11 aufwärts verschwenkt, wodurch das Dach 4 seine Spannung verliert, während des Aufwärtsverschwenkens wird gleichzeitig der Rahmen 7, der in geschlossener Stellung auf der Karosserie 2 im Bereich der Ebene der Fensterbrüstung 3 aufsteht, um den Hebel 12 aufwärts und vorwärts auf einer Kreisbahn 21 verschwenkt, wobei der Rahmen 7 seitlich an den Kopfstützen 22, gegebenenfalls zusätzlich angeordneten Überrollbügeln, vorbeibewegt wird. Würde die Heckscheibe 5 im Rahmen 7 stehenbleiben, so würde während der Bewegung des Hebels 12 um die Schwenkachse 13 eine Kollision mit den genannten Teilen resultieren. Um dies zu vermeiden, wird während der Verdecköffnung die Heckscheibe 5 durch die Schwenkhebelanordnung 15 gegenüber dem Rahmen 7 aufgeschwenkt. Dies kann beispielsweise über hydraulische oder elektrische Antriebselemente geschehen, die den Hebel 20 derart aufwärts um das Gelenk 18 bewegen, daß ein Winkel α zwischen der Heckscheibe 5 und dem Rahmen 7 eingestellt wird. Für die Bewegung des Rahmens 7 ist seinerseits entweder ein weiterer Antrieb erforderlich, oder dieser wird besonders vorteilhaft durch die Schwenkbewegung der Finnen 10 und die daraus resultierende Faltungskinematik des Daches 4 zwangsweise mitgeführt.

Das Aufschwenken betrifft nicht nur die Heckscheibe 5, sondern auch die im Querschnitt U-förmigen Führungsteile 7a, die die Absenkführung der Heckscheibe 5 bewirken. Die Heckscheibe 5 wird daher insgesamt gegenüber dem Rahmen 7, der beispielsweise im Querschnitt L-förmig ausgebildet sein kann, mit ihrem unteren Ende in Richtung des Pfeils 39 entgegen der Fahrtrichtung F aufgeschwenkt, wohingegen sie im Bereich des Querschenkels 8a des Rahmens 7 Kontakt mit diesem behält. Die die Teile 42,43 und 44 umfassenden Führungsteile 7a werden beim Aufschwenken in Richtung des Pfeils 39 an der Trennebene 37 von einer rahmenseitigen Dichtung 32 getrennt, auch in aufgeschwenkter Stellung ist daher die Heckscheibe 5 von den Führungsteilen 7a eingefaßt. Weiterhin ist eine Dichtung 41 vorgesehen, die sich mit einem Ausleger 41 a in geschlossener Stellung an dem Verdeckstoff 33 anlegt und somit eine Abdichtung zwischen Heckscheibe 5 und Verdeckstoff 33 bewirkt. In Fig. 5b ist eingezeichnet, daß als oberer Anschlag für die Heckscheibe wiederum eine deformierbare Dichtung 45 vorgesehen ist. Die Schwenkachse 47, um die herum die Heckscheibe 5 aufschwenkbar ist, befindet sich im oberen Querrahmenteil 8a und bewirkt die angesprochene Trennung der Teile an der Trennebene 37.

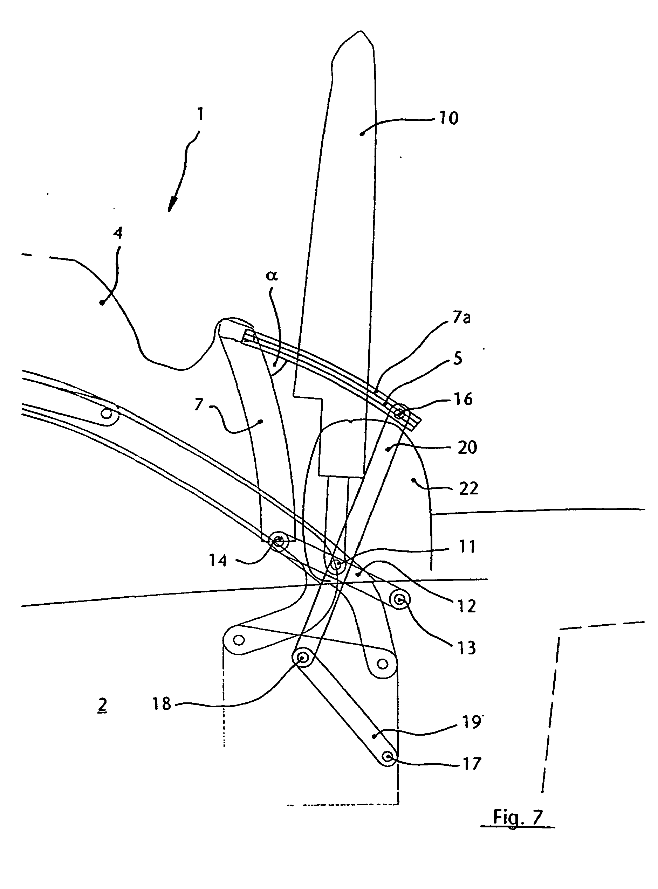

Während der weiteren Öffnung des Daches 4 (Fig. 7) werden die Finnen 10 in Senkrechtstellung gebracht, der Rahmen 7 wird weiter nach vorne und abwärts auf der Kreisbahn 21 verschwenkt, der Öffnungswinkel α zwischen der Heckscheibe 5 mit den sie einfassenden Führungsteilen 7a gegenüber dem Rahmen 7 vergrößert sich, so daß ein Kontakt der hinteren Insassen mit der Heckscheibe 5 auch in dieser Stellung vermieden ist. Die seitlichen Schenkel 8 des Rahmens 7, die an den Kopfstützen 22 seitlich vorbeibewegt werden, liegen hingegen so weit außen, daß Insassen keinen Kontakt mit ihnen bekommen.

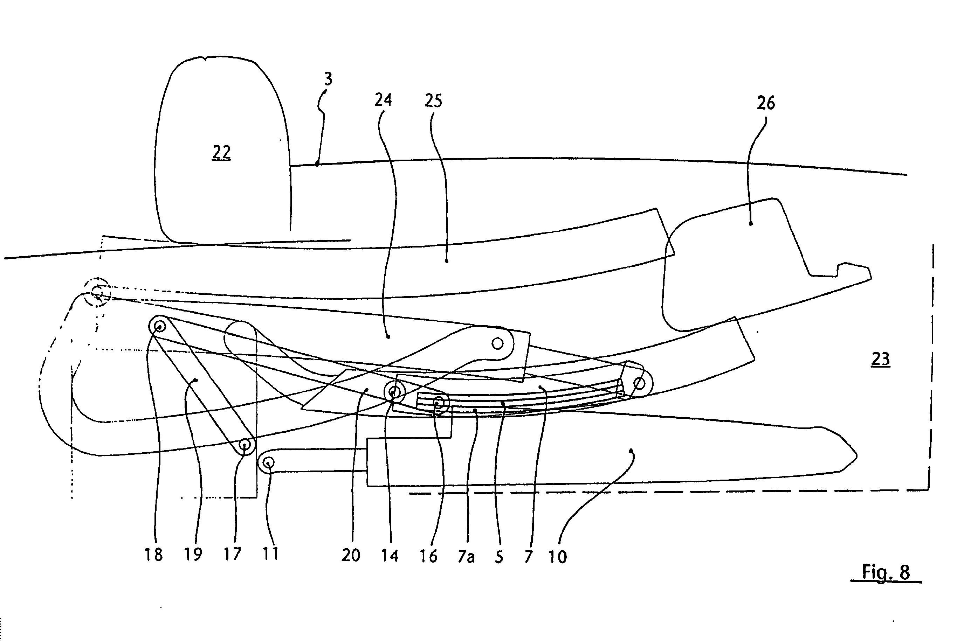

In der Stellung nach Fig. 7 kann ein rückwärtig angelenkter Verdeckkastendeckel (nicht eingezeichnet) aufgeschwenkt werden, so daß im folgenden das Dach 4 in einen Verdeckkasten 23 abgelegt werden kann. Diese Stellung ist in Fig. 8 wiedergegeben. Hierbei sind die Finnen 10 um die Schwenkachsen 11, die während der Bewegung abwärtsgeführt werden, im wesentlichen waagerecht in den Bodenbereich des Verdeckkastens 23 eingelegt, die Heckscheibe 5 ist gegenüber dem Rahmen 7 wieder eingeschwenkt, so daß der Öffnungswinkel α zurückgeführt ist. Die Heckscheibe 5 nimmt daher in eingefalteter Stellung, bei der sie vollständiger Bestandteil des Verdecks 4 bleibt, keinen über den Platzbedarf des Rahmens 7 hinausgehenden Raum ein. Die Rückschwenkung der Heckscheibe 5 gegenüber dem Rahmen 7 wird durch gekoppelte Schwenkbewegungen der Hebel 12 um die Achse 13 und der Hebel 19 und 20 um die Achsen im Hauptlager 17 und im Gelenk 18 bewirkt. Der Rahmen 7 liegt dann im wesentlichen parallel oberhalb der Finnen 10, oberhalb dieses Rahmens 7 liegen ein mittlerer Dachteil 24 und ein vorderer Dachteil 25, der sich mit seinem vorderen Querende 26 in geschlossener Stellung auf einem Windschutzscheibenrahmen abstützt. Das Dach 4 ist daher insgesamt Z-förmig eingefaltet.

Insgesamt ist daher eine Verdeckanordnung geschaffen, die eine separate Absenkung der Heckscheibe 5 im geschlossenen Zustand des Daches 4 gewährleistet, wobei jedoch bei abgelegtem Verdeck die Heckscheibe 5 ein integraler Bestandteil des Verdeckes 4 ist und mit diesem in den Verdeckkasten 23 abgelegt wird. Zusätzlich ist zur Bewirkung einer besonders günstigen Faltkinematik bei verbesserten Platzverhältnissen für die hinteren Insassen eine Aufschwenkbarkeit der Heckscheibe 5 gegenüber dem Rahmen 7 zur Vermeidung von Kollisionen ermöglicht.

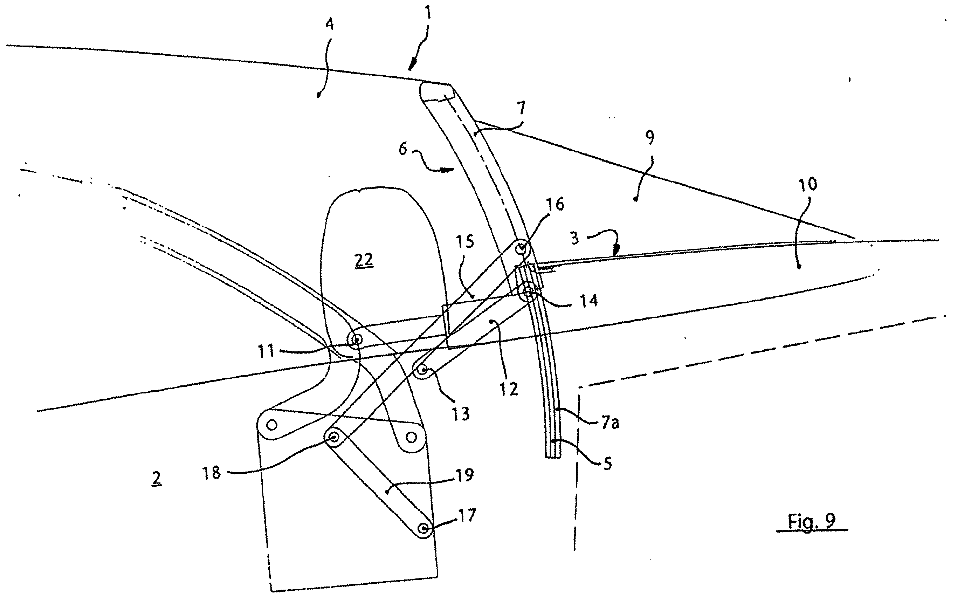

In Fig. 9 ist für das gezeigte Ausführungsbeispiel der der Fig. 4 entsprechende Zustand dargestellt, bei dem das Dach 4 geschlossen ist und die Heckscheibe 5 in ihren Führungsteilen 7a frei hängend in die Karosserie abgesenkt ist.

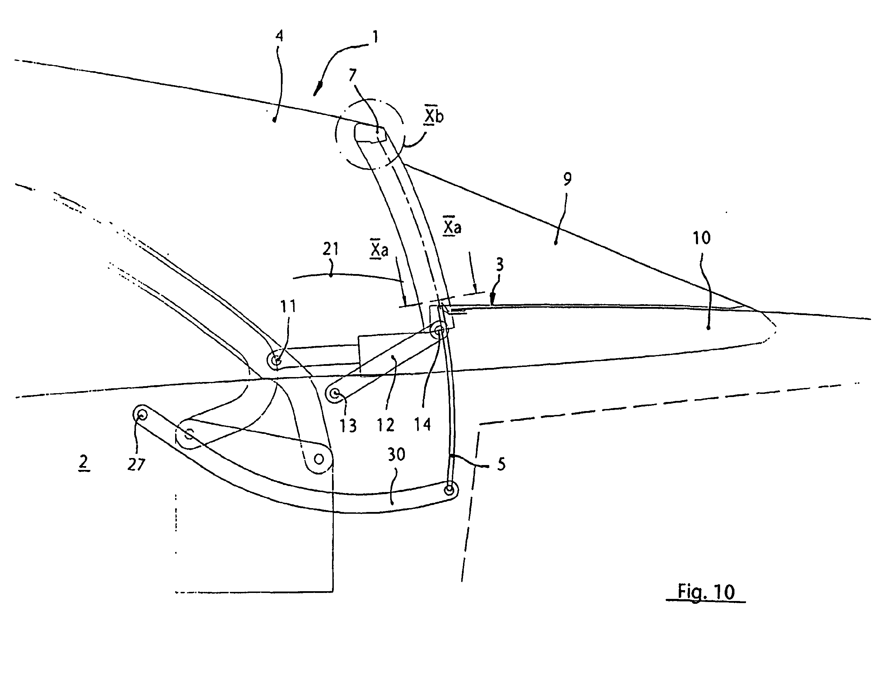

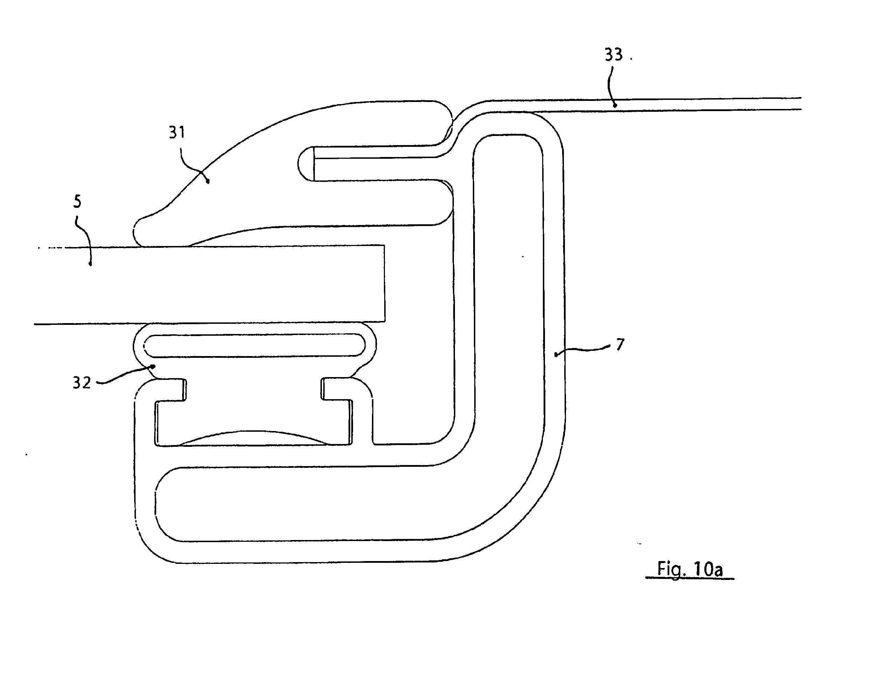

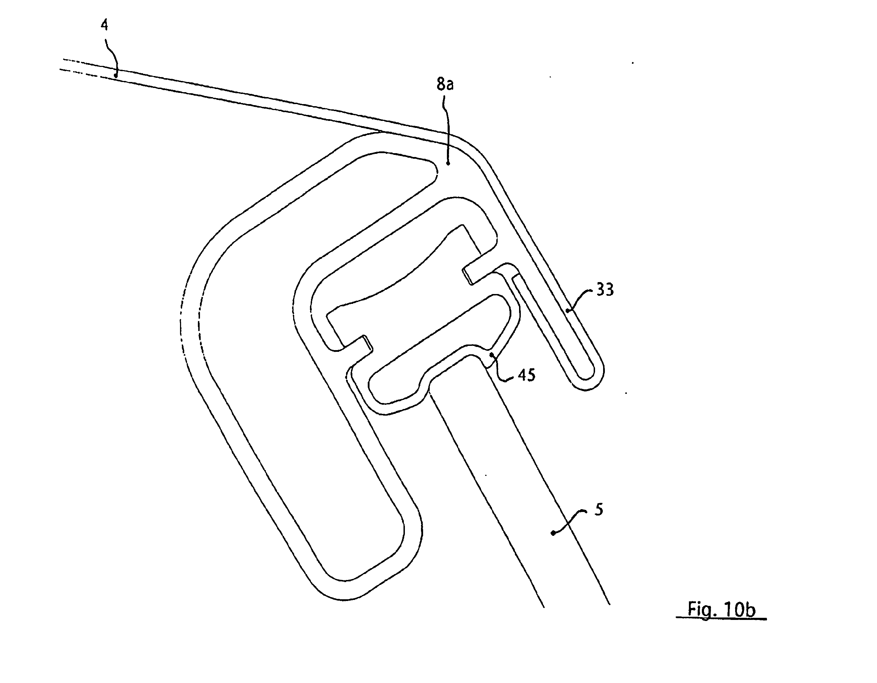

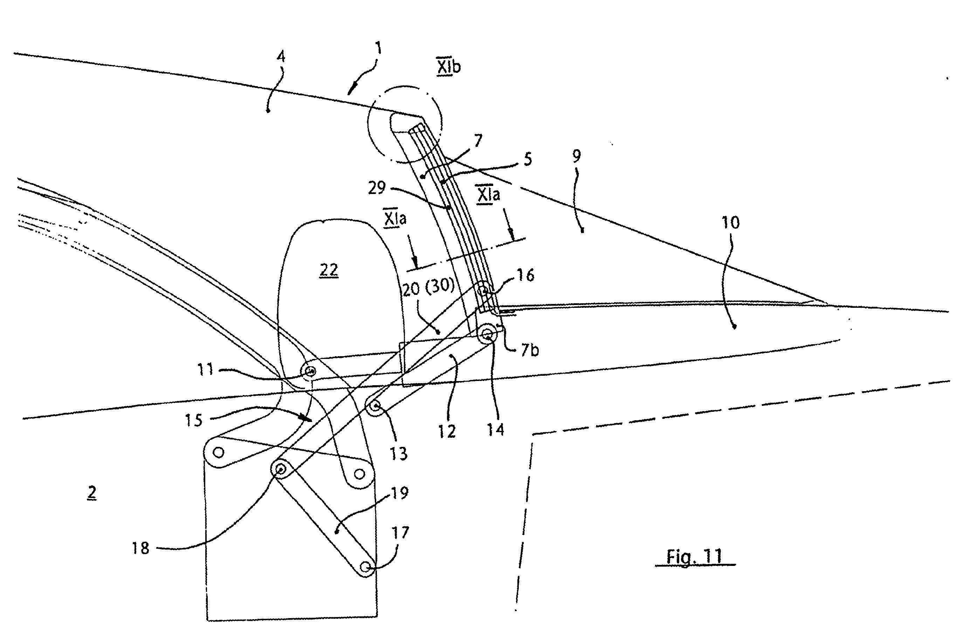

Gemäß einer dritten Ausführungsform (Fig. 10) ist vorgesehen, daß die Heckscheibe 5 über einen im unteren Bereich der Heckscheibe angreifenden und anderenends an einer Schwenkachse 27 im Bereich des Hauptlagers 17 gehaltenen Antriebshebel 30 auf und ab beweglich ist. Eine Verschwenkbarkeit der Heckscheibe 5 ist in dieser Ausführungsform entbehrlich, da hintere Kopfstützen oder dergleichen nicht montiert sind. Wie schon die erste Ausführungsform kommt auch diese insbesondere für zweisitzige Fahrzeuge in Betracht. Das Öffnen des Verdecks ist analog zur letzten Ausführungsform - mit dem Unterschied, daß während der gesamten Öffnungsphase die Heckscheibe 5 parallel zum Rahmen 7 verbleiben kann, da keine Hindernisse im Weg stehen. Die Heckscheibe 5 verfügt hier nicht über teleskopische Führungsteile 7a, sondern ist lediglich über Gleitstücke 29 im Rahmen 7 gehalten, der aufgrund der hier nicht erforderlichen Verschwenkbarkeit im Querschnitt U-förmig ausgebildet sein kann. Die Auf- und Abverlagerung der Heckscheibe 5 wird über ein elektrisches oder hydraulisches Antriebselement bewirkt, das die Verschwenkung des Antriebshebels 30 um die Schwenkachse 27 steuert.

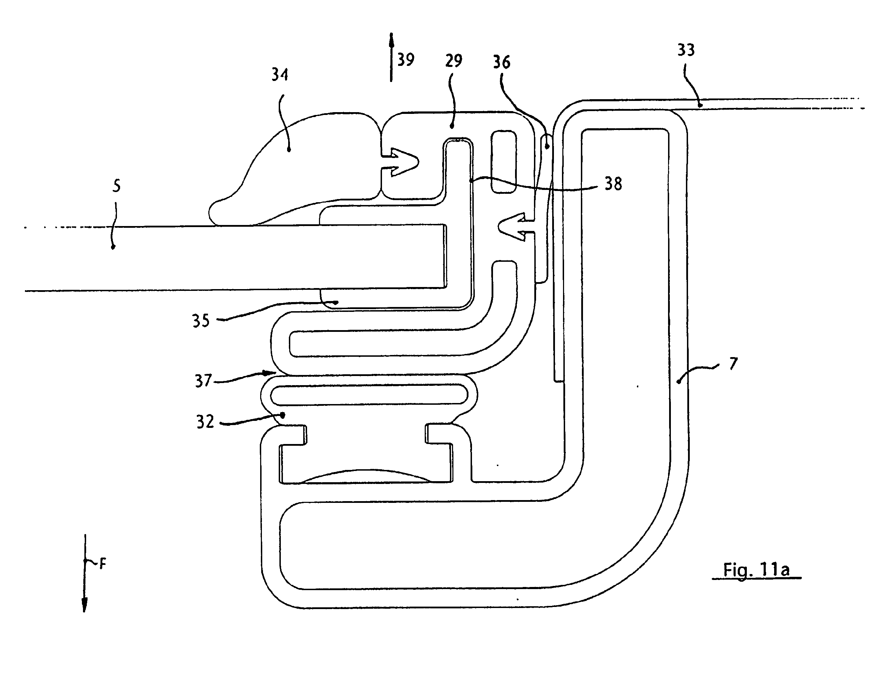

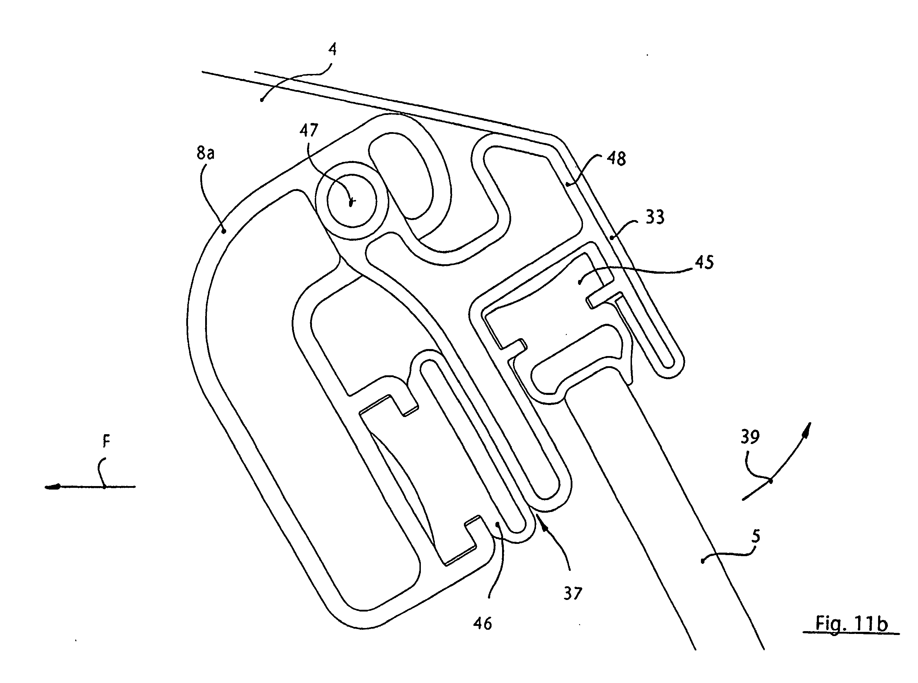

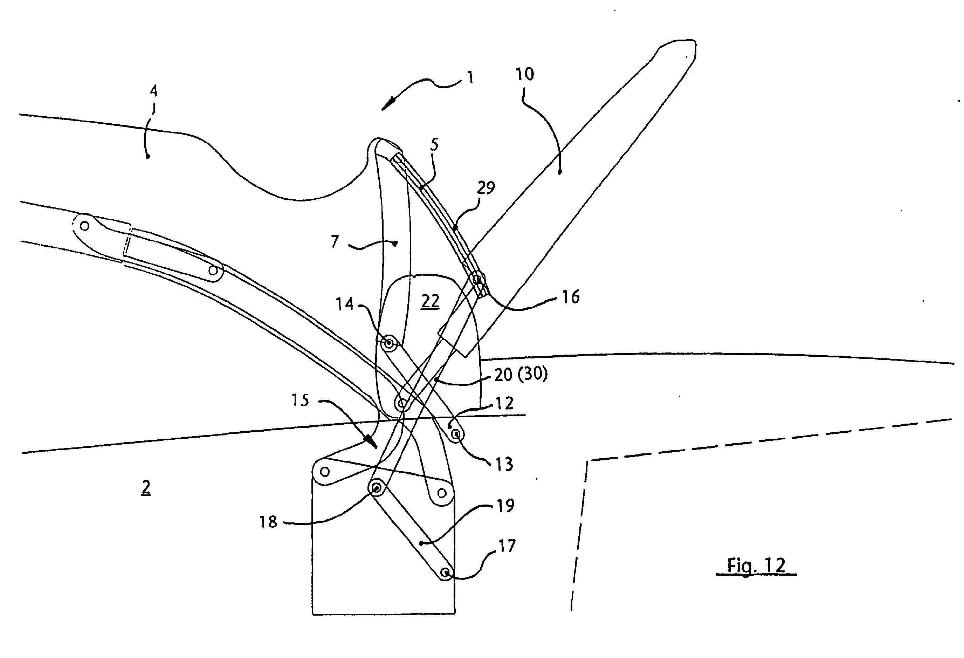

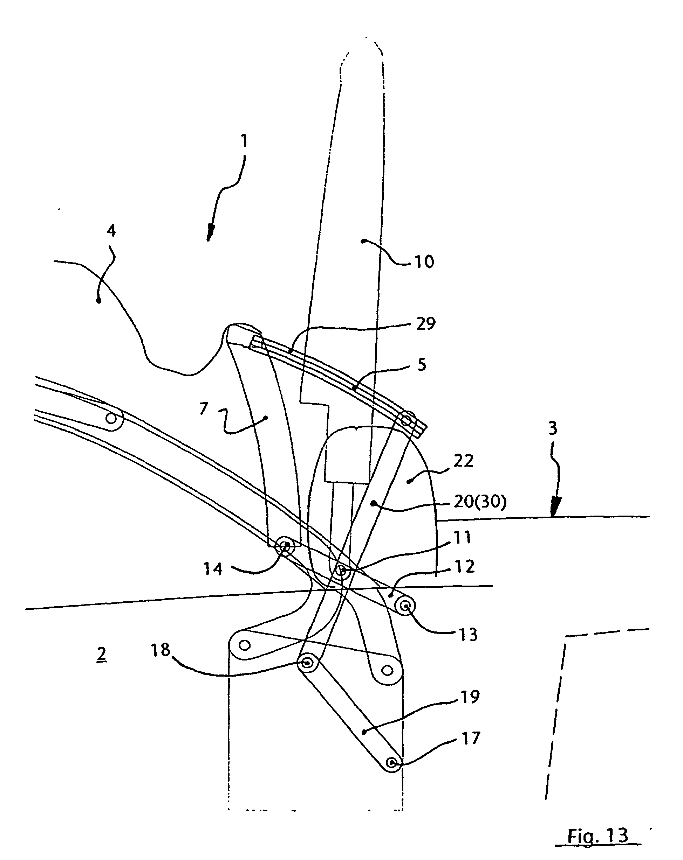

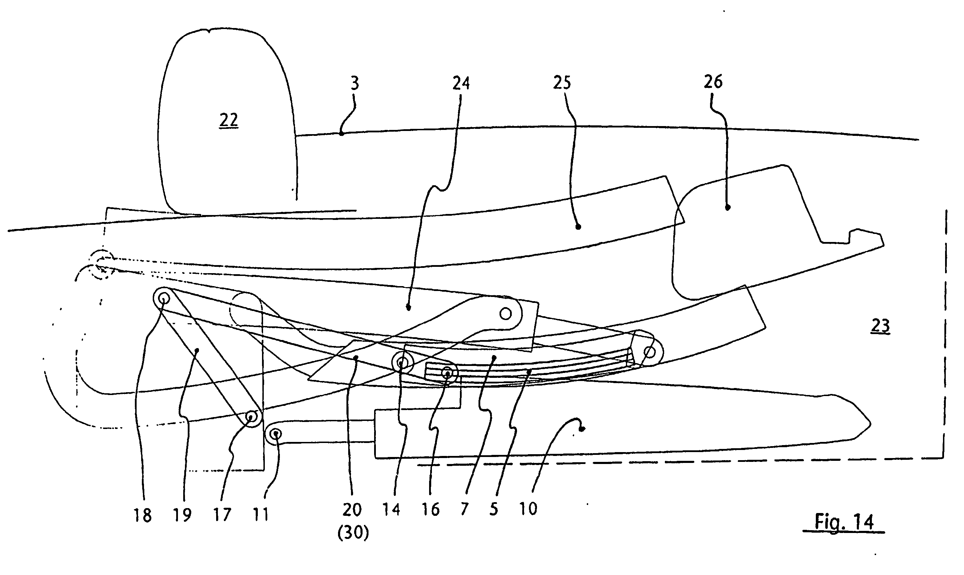

Gemäß einem vierten Ausführungsbeispiel (Fig. 11 bis 16) ist die Kombination des dritten Ausführungsbeispiels mit einer Schwenkhebelanordnung 15 dargestellt, die notwendig wird, wenn Hindernisse wie etwa Kopfstützen 22 während der Verdecköffnung zu überwinden sind. In den Fig. 11 bis 14 ist analog zu den Fig. 5 bis 8 der Öffnungsmechanismus des Daches 4 dargestellt, der genau wie im zweiten Ausführungsbeispiel verläuft. Hinsichtlich der Fig. 11 bis 14 wird daher vollständig auf die Fig. 5 bis 8 verwiesen.

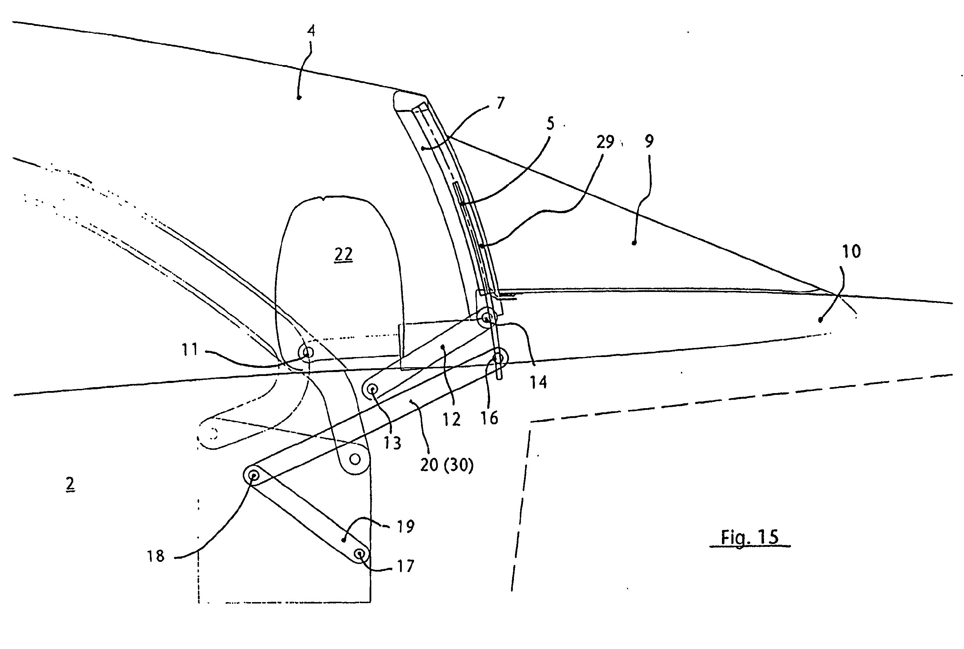

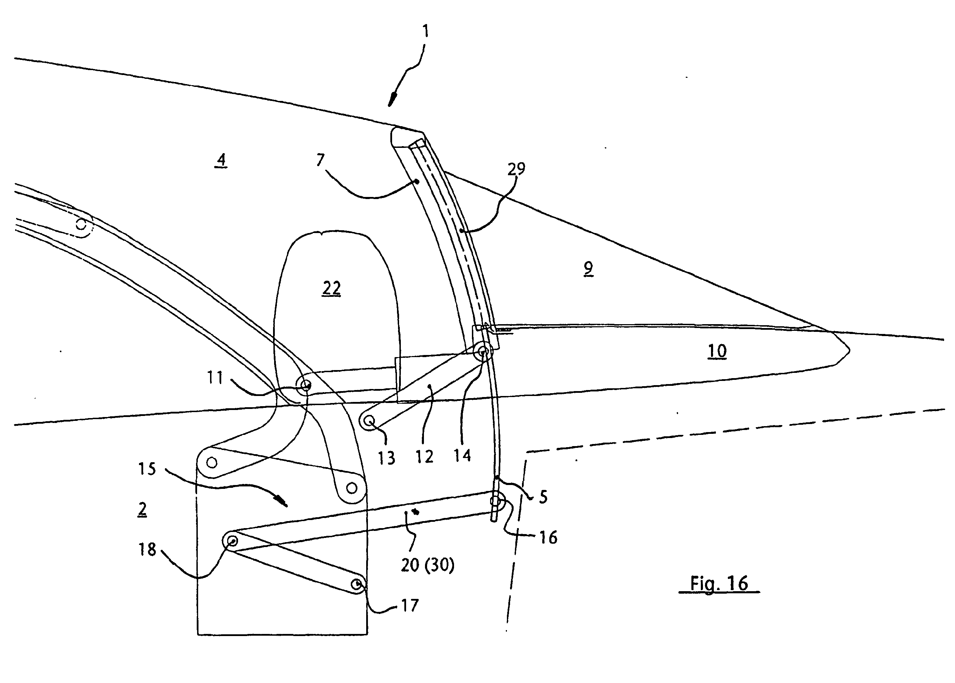

Unterschiedlich ist lediglich, daß der Schwenkhebel 20, der Bestandteil der Schwenkhebelanordnung 15 ist und zum Aufschwenken der Heckscheibe 5 während des Öffnens und Schließens des Daches 3 dient, zusätzlich einen Antriebshebel 30 darstellt für die Absenkung der Heckscheibe 5 (Fig. 15 und 16). Da die Heckscheibe 5 im Bereich der Angriffsachse 16 des Hebels 20 im unteren Bereich gehalten wird, ist eine mitlaufende teleskopische Führung 7a entbehrlich. Die Heckscheibe 5 ist statt dessen in einer Gleitführung 29 gehalten, die während der Absenkung innerhalb des Rahmens 7 verbleibt. Beim Aufschwenken der Heckscheibe 5 (Fig. 11 bis 14) wird die Gleitführung 29, die beispielsweise im Querschnitt U-förmig ausgebildet sein kann, mit verschwenkt. An Stelle der Gleitführung 29 kann eine Teleskopführung 7a auch in diesem Ausführungsbeispiel verwendet werden. Die Gleitführung 29 ist jedoch mechanisch einfacher zu realisieren. Die Gleitführung 29 ist gemäß dem vierten Ausführungsbeispiel (Fig. 11 a) in dem L-förmigen Rahmen 7 gehalten, um somit die Aufschwenkbarkeit entlang der Trennebene 37 gegenüber jenem sicherzustellen. Innerhalb der Gleitführung 29 ist ein die Heckscheibe 5 seitlich einfassender Rahmenteil 35 gehalten, der gegenüber der Gleitführung 29 verschieblich ist, wozu eine Gleitbahn 38, die als Spalt zwischen den Teilen 29 und 35 ausgebildet ist, dient. Eine zusätzliche Dichtung 36, die auch nach Art der Dichtung 41 aus Fig. 5a ausgebildet sein kann, ist vorgesehen, um den Spalt zwischen der Heckscheibe 5 und dem Verdeckstoff 33 abzudichten. Beim Aufschwenken der Heckscheibe 5 wird die Gleitführung 29 vollständig mit verschwenkt. Zusätzlich ist eine Dichtung 34 mit einer Harpunenstichbefestigung (selbstverständlich kommen auch andere Befestigungen in Frage) an der Gleitführung 29 befestigt und sorgt für die Abdichtung der Gleitbahn 38, indem die Dichtung 34 die Heckscheibe 5 gegenüber der Gleitführung 29 abdichtet.

Die obere Anlenkung der Heckscheibe 5 im Bereich des Querrahmenteils 8a des Rahmens 7 entspricht im wesentlichen der des oben gezeigten Ausführungsbeispiels in Fig. 5b.

## Patentansprüche

1. Cabriolet-Fahrzeug (1) mit einem auffaltbaren, mit einer Heckscheibe versehenen Dach (4), wobei die Heckscheibe (5) in geschlossener Stellung des Dachs (4) zumindest bereichsweise aus einer Normalstellung in eine Absenkstellung unterhalb einer die Karosserie (2) oberseitig begrenzenden Fensterbrüstungslinie (3) absenkbar ist, **dadurch gekennzeichnet, daß** die Heckscheibe (5) sowohl in Absenkstellung als auch in Normalstellung in einem mit dem Dach (4) fest verbundenen Rahmen (7) gehalten ist.

2. Cabriolet-Fahrzeug nach Anspruch 1, **dadurch gekennzeichnet, daß** die Heckscheibe (5) in einem nach unten geöffneten U-förmigen Rahmen (7) gehalten ist.

3. Cabriolet-Fahrzeug nach einem der Ansprüche 1 oder 2, **dadurch gekennzeichnet, daß** die Heckscheibe (5) in Absenkstellung unterhalb des führenden Rahmens (7) frei hängend in der Karosserie (2) gehalten ist.

4. Cabriolet-Fahrzeug nach einem der Ansprüche 1 bis 3, **dadurch gekennzeichnet, daß** die Heckscheibe (5) zum Öffnen und Schließen des Dachs (4) gegenüber dem Rahmen (7) aufschwenkbar ist.

5. Cabriolet-Fahrzeug nach Anspruch 4, **dadurch gekennzeichnet, daß** die Heckscheibe (5) in aufgeschwenkter Stellung im Bereich des Querschenkels (8a) des U-förmigen Rahmens (7) an diesem gehalten ist und mit ihrem unteren Bereich gegenüber dem Rahmen (7) ausgestellt ist.

6. Cabriolet-Fahrzeug nach einem der Ansprüche 4 oder 5, **dadurch gekennzeichnet, daß** der Rahmen (7) in geschlossener Stellung auf der Karosserie (2) im Bereich der Fensterbrüstung (3) aufsteht und während des Öffnens oder Schließens des Daches (4) in einer von dieser abhebenden Bewegungsbahn (Kreisbahn 21) geführt ist.

7. Cabriolet-Fahrzeug nach Anspruch 6, **dadurch gekennzeichnet, daß** die Führung des Rahmens (7) während des Öffnens und Schließens des Daches (4) eine Zwangsführung ist, bewirkt durch die Faltungskinematik des Daches (4).

8. Cabriolet-Fahrzeug nach einem der Ansprüche 1 bis 7, **dadurch gekennzeichnet, daß** das Dach (4) eine textile Bespannung aufweist und in seinem rückwärtigen Bereich zwei seitliche, nach hinten vorstehende, in Draufsicht im wesentlichen dreiecksförmige Endbereiche (9) umfaßt und daß die Heckscheibe (5) diesen vor- und zwischengelagert in einer annähernd vertikalen Stellung gehalten ist.

9. Cabriolet-Fahrzeug nach Anspruch 8, **dadurch gekennzeichnet, daß** die Endbereiche (9) über Spannbügel (10) gegenüber der Karosserie (2) gespannt sind, wobei die Spannbügel (10) zum Öffnen und Schließen des Daches (4) von der Karosserie (2) abheben.

10. Cabriolet-Fahrzeug nach einem der Ansprüche 1 bis 9, **dadurch gekennzeichnet, daß** die Heckscheibe (5) zwischen der Normalstellung und der Absenkstellung über dachseitige und dem Rahmen (7) zugeordnete Führungsteile (7a;29) beweglich ist.

11. Cabriolet-Fahrzeug nach Anspruch 10, **dadurch gekennzeichnet, daß** die Führungsteile (7a) mehrere gegeneinander parallel zu den Seitenschenkeln (8) des Rahmens (7) verschiebliche Teile (42;43;44) umfassen, die teleskopisch gegeneinander ausziehbar sind.

12. Cabriolet-Fahrzeug nach Anspruch 11, **dadurch gekennzeichnet, daß** der Antrieb für die Absenkung oder Rückführung der Heckscheibe (5) auf diese über die teleskopischen Führungsteile (7a) einwirkt.

13. Cabriolet-Fahrzeug nach einem der Ansprüche 1 bis 12, **dadurch gekennzeichnet, daß** als Antriebselement ein im unteren Bereich der Heckscheibe (5) an dieser angreifender und anderenends im Bereich des Hauptlagers für das Dach (4) schwenkbar gelagerter Antriebshebel (30) vorgesehen ist.

14. Cabriolet-Fahrzeug nach einem der Ansprüche 1 bis 13, **dadurch gekennzeichnet, daß** zur Bewirkung eines Aufschwenkens der Heckscheibe (5) eine Schwenkhebelanordnung (15) ausgebildet ist.

15. Cabriolet-Fahrzeug nach Anspruch 14, **dadurch gekennzeichnet, daß** die Schwenkhebelanordnung (15) einen Antriebshebel (30) für die Absenkung der Heckscheibe (5) umfaßt.

## Claims

1. Convertible vehicle (1) having a foldable roof (4) provided with a rear window, the rear window (5) being lowerable, when the roof (4) is in the raised position, at least in part from a normal position to a lowered position below a window-sill line (3) which defines the upper boundary of the bodywork (2), **characterised in that**, both in the lowered position and the normal position, the rear window (5) is held in a frame (7) which is firmly connected to the roof (4).

2. Convertible vehicle according to claim 1, **characterised in that** the rear window (5) is held in a U-shaped frame (7) which is open in the downward direction.

3. Convertible vehicle according to either of claims 1 and 2, **characterised in that**, in the lowered position, the rear window (5) is held in a freely suspended position in the bodywork (2), below the guiding frame (7).

4. Convertible vehicle according to one of claims 1 to 3, **characterised in that** the rear window (5) can be pivoted up relative to the frame (7) to allow the roof (4) to be lowered and raised.

5. Convertible vehicle according to claim 4, **characterised in that**, in the pivoted-up position, the rear window (5) is held against the U-shaped frame (7) in the region of the cross-member (8a) thereof and is angled out relative to the frame (7) by its bottom region.

6. Convertible vehicle according to either of claims 4 and 5, **characterised in that**, in the raised position, the frame (7) stands on the bodywork (2) in the region of the window sill (3) and during the lowering or raising of the roof (4) is guided along a path of movement (circular path 21) which lifts it away from the said window sill (3).

7. Convertible vehicle according to claim 6, **characterised in that** the guidance of the frame (7) during the lowering and raising of the roof (4) is positive guidance provided by the kinematics by which the roof (4) is folded.

8. Convertible vehicle according to one of claims 1 to 7, **characterised in that** the roof (4) has a textile covering and in its rear region comprises two lateral end regions which project backwards and which are substantially triangular when seen in plan, and **in that** the rear window (5) is held in an approximately vertical position when positioned in front of and between these.

9. Convertible vehicle according to claim 8, **characterised in that** the end regions (9) are tensioned relative to the bodywork (2) by means of tensioning bows (10), the tensioning bows (10) lifting away from the bodywork (2) to allow the roof (4) to be lowered and raised.

10. Convertible vehicle according to one of claims 1 to 9, **characterised in that** the rear window (5) is movable between the normal position and the lowered position by means of roof-assigned guide parts (7a, 29) which are associated with the frame (7).

11. Convertible vehicle according to claim 10, **characterised in that** the guide parts (7a) comprise a plurality of parts (42, 43, 44) which are displaceable relative to one another parallel to the side members (8) of the frame (7) and which can be drawn out telescopically relative to one another.

12. Convertible vehicle according to claim 11, **characterised in that** the drive for lowering or returning the rear window (5) acts thereon via the telescopic guide parts (7a).

13. Convertible vehicle according to one of claims 1 to 12, **characterised in that** what is provided as a driving member is a drive lever (30) which engages with the rear window (5) at the bottom region thereof and which is pivotably mounted at the other end in the region of the main mounting for the roof (4).

14. Convertible vehicle according to one of claims 1 to 13, **characterised in that** a pivot-lever arrangement (15) is designed to cause a pivoting-up of the rear window (5).

15. Convertible vehicle according to claim 14, **characterised in that** the pivot-lever arrangement (15) comprises a drive lever (30) for the lowering of the rear window (5).

## Revendications

1. Véhicule cabriolet (1) comprenant un toit (4) pliant muni d'une lunette arrière, la lunette arrière (5), en position fermée du toit (4), pouvant être abaissée au moins partiellement d'une position normale dans une position abaissée en dessous d'une ligne de parapet de fenêtre (3) délimitant la carrosserie (2) vers le haut,
**caractérisé en ce que**
la lunette arrière (5) est maintenue dans un cadre (7) solidaire du toit (4), aussi bien en position abaissée qu'en position normale.

2. Véhicule cabriolet selon la revendication 1,
**caractérisé en ce que**
la lunette arrière (5) est maintenue dans un cadre en forme de U (7) ouvert vers le bas.

3. Véhicule cabriolet selon l'une quelconque des revendications 1 ou 2,
**caractérisé en ce qu'**
en position abaissée la lunette arrière (5) est maintenue en dessous du cadre de guidage (7) en suspension libre dans la carrosserie (2).

4. Véhicule cabriolet selon l'une quelconque des revendications 1 à 3,
**caractérisé en ce que**
la lunette arrière (5) pivote par rapport au cadre (7) pour ouvrir et fermer le toit (4).

5. Véhicule cabriolet selon la revendication 4,
**caractérisé en ce qu'**
en position pivotée, la lunette arrière (5) est maintenue sur le cadre en forme de U (7) dans sa zone de branche transversale (8a) du U et sa zone inférieure est déployée hors du cadre (7).

6. Véhicule cabriolet selon l'une quelconque des revendications 4 ou 5,
**caractérisé en ce qu'**
en position fermée, le cadre (7) s'appuie sur la carrosserie (2) dans la zone du parapet de fenêtre (3) et, pendant l'ouverture ou la fermeture du toit (4), il est guidé sur une trajectoire de mouvement (trajectoire circulaire 21) le retirant de celui-ci.

7. Véhicule cabriolet selon la revendication 6,
**caractérisé en ce que**
pendant l'ouverture et la fermeture du toit (4) le guidage du cadre (7) est un guidage forcé engendré par une cinématique de pliage du toit (4).

8. Véhicule cabriolet selon l'une quelconque des revendications 1 à 7,
**caractérisé en ce que**
le toit (4) présente un habillage textile et comprend dans sa zone arrière deux zones terminales (9) latérales saillant vers l'arrière, essentiellement triangulaires vues de dessus, et la lunette arrière (5) est maintenue dans une position sensiblement verticale devant ou entre ces zones terminales.

9. Véhicule cabriolet selon la revendication 8,
**caractérisé en ce que**
les zones terminales (9) sont tendues par rapport à la carrosserie par des étriers de serrage (10), les étriers de serrage (10) se retirant de la carrosserie (2) pour ouvrir et fermer le toit (4).

10. Véhicule cabriolet selon l'une quelconque des revendications 1 à 9,
**caractérisé en ce que**
la lunette arrière (5) est déplaçable entre la position normale et la position abaissée, à l'aide d'éléments de guidage (7a ; 29) situés côté toit et associés au cadre (7).

11. Véhicule cabriolet selon la revendication 10,
**caractérisé en ce que**
les éléments de guidage (7a) comprennent plusieurs parties (42 ; 43 ; 44) déplaçables les unes par rapport aux autres parallèlement aux branches latérales (8) du cadre (7) et coulissantes de manière télescopique les unes par rapport aux autres.

12. Véhicule cabriolet selon la revendication 11,
**caractérisé en ce que**
l'entraînement pour abaisser ou ramener la lunette arrière (5) agit sur celle-ci par l'intermédiaire des éléments télescopiques (7a).

13. Véhicule cabriolet selon l'une quelconque des revendications 1 à 12,
**caractérisé en ce que**
comme élément d'entraînement un levier d'entraînement (30) est fixé dans la zone inférieure de la lunette arrière (5) et logé en pivotement par son autre extrémité dans la zone du palier principal pour le toit (4).

14. Véhicule cabriolet selon l'une quelconque des revendications 1 à 13,
**caractérisé en ce qu'**
un dispositif à levier pivotant (15) est prévu pour activer un pivotement d'ouverture de la lunette arrière (5).

15. Véhicule cabriolet selon la revendication 14,
**caractérisé en ce que**
le dispositif à levier pivotant (15) comprend un levier d'entraînement (30) pour abaisser la lunette arrière (5).
